# EUROPÄISCHE PATENTSCHRIFT

(11) **EP 3 442 673 B1**
(45) Veröffentlichungstag und Bekanntmachung des Hinweises auf die Patenterteilung: **10.06.2020**
(21) Anmeldenummer: 17717401.8
(22) Anmeldetag: 12.04.2017
(51) Int. Cl.: A63B 21/00, A63B 21/02, A63B 23/02, A63B 23/12, A63B 21/04, A63B 21/045, A63B 21/05, A63B 23/035, A63B 23/04, A63B 23/16

(54) **MUSKELTRAINER UND VERFAHREN ZU DESSEN HERSTELLUNG**
MUSCLE TRAINER AND METHOD FOR ITS PRODUCTION
DISPOSITIF D'ENTRAINEMENT DE LA MUSCULATURE ET SON PROCEDE DE FABRICATION

(30) Priorität: 15.04.2016 EP 16165512; 12.09.2016 EP 16188354
(43) Veröffentlichungstag der Anmeldung: 20.02.2019
(73) Patentinhaber: BASF SE, 67056 Ludwigshafen am Rhein (DE)
(72) Erfinder: JAKOBI, Reinhard, 67056 Ludwigshafen (DE); GRUBER, Thomas, 67056 Ludwigshafen (DE); ENDEMANN, Ulrich, 67056 Ludwigshafen (DE); HOHENSTEIN, Thomas, 67056 Ludwigshafen (DE); LEUTZ, Daniel, 67056 Ludwigshafen (DE); NIXDORF, Andreas, 67056 Ludwigshafen (DE)
(86) Internationale Anmeldenummer: PCT/EP2017/058797
(87) Internationale Veröffentlichungsnummer: WO 2017/178535

(56) Entgegenhaltungen:
- FR-A3- 2 961 708
- KR-A- 20130 012 427
- US-A- 3 219 342
- US-A- 3 377 722
- US-A1- 2003 228 962
- US-A1- 2013 157 817

## Beschreibung

Die Erfindung betrifft einen Muskeltrainer mit zwei Federelementen sowie ein Verfahren zu dessen Herstellung.

Im Stand der Technik sind verschiedenartige Muskeltrainer zum Aufbau von Muskeln bekannt. Handtrainer beispielsweise werden zur Stärkung der Handmuskulatur verwendet. Hierbei wird vom Verwender eine Kraft auf den Handtrainer ausgeübt, wobei der Handtrainer über ein elastisches Element eine Gegenkraft erzeugt. Übliche Handtrainer verwenden als elastisches Element eine Feder aus einem Metall. Derartige Handtrainer müssen mit geeigneten Griffen versehen werden, was deren Gestaltung und Herstellung aufwändig macht. Die Griffe bestehen in der Regel aus unterschiedlichen Materialien, beispielsweise aus einem Kunststoff. Bei der Betätigung eines solchen Handtrainers durch den Verwender werden die Griffe bei Belastung aufeinander zu bewegt und bei Entlastung federn sie wieder in die Ausgangsposition zurück.

Aus der Gebrauchsmusterschrift DE 20 2014 009 325 U1 ist ein Handtrainer bekannt, der aus einem relativ biegesteifen Flächenelement und einem elastischen Element besteht, wobei das elastische Element eine Aufnahme für den Daumen aufweist und das biegesteife Flächenelement weitere Fingeraufnahmen aufweist. Die Finger außer dem Daumen werden hierdurch in eine feste Position relativ zum Daumen gebracht. Das Trainingsgerät erlaubt dadurch ein gezieltes Training der Daumenmuskulatur. Weitere Teile der Handmuskulatur lassen sich nicht trainieren.

In der Offenlegungsschrift DE 10 2012 108 655 A1 wird ein Fitnessgerät mit elastischen Elementen beschrieben, wobei die elastischen Elemente Polyurethan aufweisen. Mehrere elastische Elemente können in dem Fitnessgerät miteinander verbunden werden, wodurch sich ein entsprechend steiferes elastisches Element ergibt. Diese Verbindung erfordert jedoch einen festen Verbund, der relativ viel Platz in Anspruch nimmt. Des Weiteren treten an der Verbindung bei Belastung hohe Werkstoffbeanspruchungen auf.

In der Offenlegungsschrift KR 2013 0012427 wird ein Muskeltrainer mit den Merkmale des Präambel vom Anspruch 1 beschrieben.

Eine Aufgabe der Erfindung ist einen Muskeltrainer bereitzustellen, der eine kompakte Bauform aufweist und einfach herzustellen ist. Des Weiteren ist es eine Aufgabe der Erfindung, die in einem Muskeltrainer bei Betätigung auftretende Werkstoffbeanspruchung möglichst gering zu halten. Hierbei sollen bevorzugt die zur Betätigung benötigte Kraft sowie die dabei erfolgende Verformung mit üblichen Muskeltrainern vergleichbar sein.

Es wird ein Muskeltrainer vorgeschlagen umfassend ein erstes gekrümmtes, längliches Federelement und ein zweites gekrümmtes, längliches Federelement, wobei die beiden Federelemente mit ihren konkaven Seiten einander zugewandt angeordnet sind, an den Enden der beiden Federelemente jeweils Endbereiche ausgebildet sind, wobei an einem ersten Endbereich jedes Federelements ein erstes Gelenkelement ausgebildet ist und an einem zweiten Endbereich jedes Federelements ein zweites Gelenkelement ausgebildet ist, und die Federelemente über aus den Gelenkelementen gebildete Gelenke an ihren beiden Endbereichen miteinander verbunden sind, dadurch gekennzeichnet, dass die ersten Gelenkelemente als Laschen ausgebildet sind, wobei die Laschen eine Biegung in Richtung der konkaven Seite des jeweiligen Federelements aufweisen und jeweils das zweite Gelenkelement des jeweils anderen Federelements zumindest teilweise umschließen.

Die Form der beiden Federelemente kann beispielsweise als eine im Wesentlichen rechteckige Platte ausgestaltet sein, wobei die rechteckige Platte eine lange Seite und eine kürzere Seite aufweist. Die Endbereiche sind dabei an den Enden der langen Seite angeordnet. Die rechteckige Platte ist gekrümmt, wobei die Krümmungsachse parallel zu der kurzen Seite und senkrecht zur langen Seite verläuft. Unter Vernachlässigung der Krümmung des Federelements wird die Richtung parallel zur kurzen Seite als Querrichtung angesehen, die Richtung parallel zur langen Seite wird als Längsrichtung angesehen und die Richtung senkrecht zur Fläche der Platte wird als Vertikalrichtung angesehen. Diese Form der Federelemente kann auch als senkrechtes Zylindersegment beschrieben werden, wobei die Grundfläche des senkrechten Zylindersegments im Wesentlichen sichelförmig ausgestaltet ist. Die Richtung parallel zu der Verbindung der beiden Enden der Sichelform wird als Längsrichtung bezeichnet und die Richtung senkrecht zur Grundfläche des Zylinders wird als Querrichtung bezeichnet. Die Vertikalrichtung ist sowohl zur Längsrichtung als auch zur Querrichtung senkrecht. Die beiden Endbereiche eines Federelements sind bei dieser Beschreibung der Form an den Enden der Sichelform angeordnet.

Der Muskeltrainer umfasst zwei solche längliche gekrümmte Federelemente, die im Muskeltrainer derart zueinander angeordnet sind, dass deren konkaven Seiten einander zugewandt sind. Die beiden Federelemente sind an ihren Enden über Gelenke miteinander verbunden. Bevorzugt besteht der Muskeltrainer aus genau zwei Federelementen.

Jedes der Federelemente weist an seinen beiden Endbereichen jeweils ein Gelenkelement auf, wobei jeweils ein erstes Gelenkelement eines Federelements zusammen mit einem zweiten Gelenkelement des jeweils anderen Federelements ein Gelenk ausbildet. Die so gebildeten zwei Gelenke verbinden die beiden Federelemente derart, dass bei einer Betätigung des Muskeltrainers mit einer Krafteinwirkung parallel zur vertikalen Richtung die Verbindungen zwischen den beiden Federelementen in vorteilhafter Weise nicht oder nur gering biegebelastet und biegebeansprucht werden. Die größte Biegebelastung wird auf den Teil des Federelements aufgebracht, der in der Mitte zwischen den beiden Endbereichen liegt. Mit dem Begriff Biegebeanspruchung ist die mechanische Spannung im Werkstoff gemeint. Bevorzugt wird das Federelement derart ausgestaltet, dass die Biegebeanspruchung über die Länge des Federelements annähernd konstant gehalten wird. Mit dem Begriff Biegebelastung wird das Biegemoment bezeichnet, welches von der Mitte des Federelements zum Rand hin abnimmt.

Bei einer Betätigung des Muskeltrainers wird durch die Federelemente eine Gegenkraft erzeugt, gegen die ein Nutzer des Muskeltrainers arbeiten muss. Die Größe der Gegenkraft wird dabei durch die Gestaltung der Federelemente und durch den verwendeten Werkstoff bestimmt und richtet sich nach den mit dem Muskeltrainer zu trainierenden Muskeln und/oder dem Trainingsstand des Nutzers. Bevorzugt ist der Muskeltrainer als Handtrainer ausgestaltet.

Bevorzugt variiert die Wanddicke eines Federelements in Längsrichtung gesehen, also über die Strecke von einem Ende zum anderen Ende, wobei die größte Wanddicke bevorzugt in der Mitte erreicht wird. Die größte Wanddicke liegt bevorzugt im Bereich von 2 bis 8 mm und besonders bevorzugt im Bereich von 3 bis 6 mm. Die kleinste Wanddicke liegt bevorzugt im Bereich von 0,5 bis 5 mm und besonders bevorzugt im Bereich von 1 bis 3 mm. Durch die Variation der Wanddicke kann das Federelement in den Bereichen am stärksten ausgeführt werden, in denen die größten Biegebelastungen auftreten. Bevorzugt weisen das erste und das zweite Federelement die gleiche Wanddicke bzw. den gleichen Verlauf der Wanddicke auf.

Alternativ oder zusätzlich kann die Breite des Federelements, also die Länge der kurzen Seite, in Längsrichtung gesehen variieren. Bevorzugt weist das Federelement seine größte Breite in den Endbereichen auf. Die größte Breite liegt - je nach Anwendungszweck - bevorzugt im Bereich von 20 mm bis 150 mm. Bei der Anwendung als Handtrainer liegt die größte Breite bevorzugt im Bereich von 20 mm bis 50 mm und besonders bevorzugt im Bereich 25 mm bis 35 mm. Die kleinste Breite liegt bevorzugt im Bereich von 5 mm bis 100 mm. Bei der Anwendung als Handtrainer liegt die kleinste Breite bevorzugt im Bereich von 5 mm bis 35 mm und besonders bevorzugt im Bereich von 10 mm bis 25 mm. Erfolgt keine Variation der Breite, so ist die Breite der Federelemente bevorzugt im Bereich von 20 mm bis 150 mm gewählt, bei der Anwendung als Handtrainer bevorzugt im Bereich von 20 mm bis 50 mm. Bevorzugt weisen das erste und das zweite Federelement die gleiche Breite bzw. den gleichen Verlauf der Breite auf.

Die Länge der Federelemente, also die Ausdehnung in Längsrichtung, liegt bevorzugt im Bereich von 150 mm bis 350 mm, bei der Anwendung als Handtrainer besonders bevorzugt im Bereich von 180 mm bis 230 mm.

Der Muskeltrainer wird bevorzugt derart betätigt, dass eine Krafteinwirkung im Bereich der Mitte der Flächen der Federelemente erfolgt. Hierzu ist es bevorzugt, an den Federelementen jeweils einen Krafteinleitungsbereich auszubilden, damit der Muskeltrainer durch den Verwender leichter zu verwenden oder zu greifen ist. Im Fall der Ausgestaltung des Muskeltrainers als Handtrainer werden die Krafteinleitungsbereiche bevorzugt als Griffe ausgestaltet. Der Krafteinleitungsbereich ist in Längsrichtung der Federelemente gesehen bevorzugt in der Mitte der Federelemente ausgebildet.

Die maximale Federkraft des Muskeltrainers, die bei einer Betätigung als Gegenkraft wirkt, wird über die Wahl der Geometrie der Federelemente und die Wahl des Materials der Federelemente eingestellt und liegt bevorzugt im Bereich von 40 bis 300 N und besonders bevorzugt im Bereich von 50 bis 120 N. Die maximale Federkraft wird erreicht, wenn durch Krafteinwirkung die Federelemente derart verformt werden, dass die Federelemente sich im Bereich der Mitte der Flächen der Federelemente berühren. In diesem Zustand ist durch die Verformung die Krümmung der Federelemente im Wesentlichen aufgehoben. Die bei einer Betätigung des Muskeltrainers maximal mögliche Verformung ist durch den größten Abstand zwischen den beiden Federelementen definiert und wird über die Krümmung der Federelemente vorgegeben. Der größte Abstand zwischen den beiden Federelementen liegt bevorzugt im Bereich von 20 mm bis 200 mm, bei der Anwendung als Handtrainer besonders bevorzugt im Bereich von 50 bis 100 mm. Die maximale Federkraft und die maximale Federverformung können auch (z. B. um bei der Anwendung als Handtrainer eine komfortablere Bedienung zu erreichen) durch zwischen den Krafteinleitungsbereichen der beiden Federelemente eingebrachte Abstandshalter begrenzt werden. In diesem Fall wird die Krümmung der Federelemente auch bei Aufbringen der maximalen Federkraft nicht ganz aufgehoben.

Bevorzugt sind die zweiten Gelenkelemente abgerundet ausgestaltet und die Laschen bilden jeweils ein Lager aus, in dem das jeweils umschlossene zweite Gelenkelement drehbar gelagert ist. Jeweils das erste Gelenkelement beider Federelemente ist als Lasche ausgebildet, wobei die Lasche eine Biegung in Richtung der konkaven Seite des Federelements aufweist. Die Laschen weisen in dem Bereich, der an das Federelement angrenzt, einen im Vergleich zur Krümmung des Federelements kleinen Biegeradius auf. Bevorzugt laufen die Laschen in einen nicht oder nur gering gekrümmten Bereich aus. Der Bereich mit dem kleinen Biegeradius bildet dabei ein Lager für das andere Gelenkelement aus. Der kleine Biegeradius ist dazu bevorzugt an die abgerundete Form des zweiten Gelenkelements angepasst. Das zweite Gelenkelement eines Federelements ist in dem ersten Gelenkelement bzw. der Lasche des anderen Federelements drehbar gelagert, so dass bei Betätigung des Muskeltrainers die Gelenkelemente der Federelemente relativ zu denen des anderen Federelements eine Drehbewegung ausführen können. Diese Beweglichkeit zueinander vermeidet bzw. minimiert im Bereich der Gelenke die Biegebeanspruchung bei Betätigung des Muskeltrainers. Bevorzugt sind die zweiten Gelenkelemente als Walzen ausgestaltet, deren Radius dem kleinen Biegeradius der Lasche bevorzugt entspricht.

Das Federelement geht bevorzugt tangential in die Lasche über. Alternativ ist es möglich den Übergang vom Federelement zur Lasche derart auszugestalten, dass die in Richtung der konkaven Seite des Federelements gekrümmte Lasche in Richtung der konvexen Seite des Federelements angewinkelt angeordnet ist.

Bevorzugt weisen das erste Federelement und das zweite Federelement eine identische Geometrie auf. Zwei solcher identisch ausgestalteter Federelemente bilden dabei den Muskeltrainer, wobei das erste Federelement und das zweite Federelement so zueinander angeordnet sind, dass die konkaven Seiten der Federelemente einander zugewandt sind und an den Enden der Federelemente jeweils ein erstes Gelenkelement an ein zweites Gelenkelement des jeweils anderen Federelements angrenzt. Vorteilhafterweise müssen auf diese Weise keine verschiedenen Teile hergestellt werden, so dass die beiden Federelemente mit dem gleichen Werkzeug, beispielsweise einer Spritzgussform, herstellbar sind. Bevorzugt werden die beiden Federelemente als zwei getrennte Teile hergestellt. Zwei identische Federelemente lassen sich durch Drehen eines der beiden Federelemente um die Querachse derart zusammenfügen, dass jeweils die Laschen die zweiten Gelenkelemente zumindest teilweise umschließen.

Bevorzugt bildet jeweils ein Gelenkelement des ersten Federelements mit einem Gelenkelement des zweiten Federelements einen Formschluss aus, der eine seitliche Bewegung des ersten Federelements relativ zum zweiten Federelement verhindert. Als eine seitliche Bewegung wird hierbei eine Bewegung parallel zur für die Federelemente definierten Querrichtung angesehen.

Bevorzugt wird der Formschluss durch jeweils mindestens einen Schnapphaken an dem zweiten Gelenkelement des Federelements gebildet, der jeweils in eine korrespondierende Öffnung oder in eine korrespondierende Aussparung an der Lasche bzw. im ersten Endbereich des Gelenkelementes des Federelements eingreift. Der Schnapphaken erstreckt sich von dem zweiten Gelenkelement im Wesentlichen in einer Richtung, die in der von der Längsrichtung und der Vertikalrichtung aufgespannten Ebene liegt, so dass durch den entstehenden Formschluss Relativbewegungen der entsprechenden Gelenkelemente in Richtungen parallel zur Querrichtung verhindert werden.

Der Schnapphaken weist bevorzugt in die Vertikalrichtung, da er dann im Zusammenwirken mit der Öffnung in dem ersten Endbereich neben der Verhinderung der Relativbewegung in Querrichtung auch eine Relativbewegung in Längsrichtung verhindert.
Der Formschluss wird dadurch zusätzlich gesichert, dass sich ein Vorsprung am Schnapphaken an der Außenseite des anderen Federelementes abstützt. Der Schnapphaken ist so ausgestaltet und angeordnet, dass durch den Formschluss sowohl eine Bewegung des ersten Federelements relativ zum zweiten Federelement in Querrichtung als auch eine Bewegung in Längsrichtung und in vertikaler Richtung verhindert wird. Lediglich eine Drehbewegung um die Querachse des Gelenks ist möglich. Der Schnapphaken ist hierzu durch die Öffnung hindurchgeführt und sein Vorsprung greift über die Außenseite des anderen Federelementes.

Bevorzugt weist das zweite Gelenkelement in vertikaler Richtung gesehen unterhalb des Schnapphakens eine Öffnung auf, so dass das Federelement in vertikaler Richtung keine Hinterschneidungen aufweist.

Alternativ oder zusätzlich kann die Wanddicke der Lasche, über die Breite des Federelements gesehen, kontinuierlich variieren, wobei die Wanddicke beispielsweise in der Mitte am Größten ist und sich zu den Seitenrändern hin verringert. Dabei weist die Wanddicke bzw. im Fall eines als Walze ausgestalteten zweiten Gelenkelements der Durchmesser des zweiten Gelenkelements des Federelements entsprechend, über die Breite des Federelements gesehen, ebenfalls eine Variation auf, wobei die Wanddicke bzw. der Durchmesser in der Mitte am geringsten ist und sich zu den Seitenrändern hin vergrößert. Hierbei werden die Gelenkelemente als Teil des Federelements angesehen, so dass die beschriebene Variation der Wanddicke an den Gelenkelementen und/oder an den Endbereichen der Federelemente erfolgen kann.

Die Gelenke des vorgeschlagenen Muskeltrainers verbinden die beiden Federelemente sicher, so dass eine ungewollte Trennung der Federelemente nicht erfolgt. In bevorzugten Ausführungsformen werden Relativbewegungen der gepaarten Gelenkelemente zueinander in allen drei Raumrichtungen unterbunden, wobei eine Drehbewegung bei Betätigung des Muskeltrainers möglich bleibt. Durch diese Drehbewegung werden Biegebeanspruchungen bei der Betätigung des Muskeltrainers vorteilhafterweise in den Endbereichen weitgehend vermieden. Die Gelenke sind vorteilhafter Weise kompakt und beanspruchen wenig Raum.

Der Muskeltrainer ist bevorzugt aus zwei Teilstücken zusammengesetzt, wobei jedes Teilstück eines der Federelemente umfasst. Bevorzugt sind sowohl das erste Federelement als auch das zweite Federelement jeweils frei von Hinterschnitten ausgeführt. Dies ermöglicht eine einfache Fertigung der Federelemente mittels Spritzgießen. Vorteilhafter Weise kommt die Gussform ohne bewegliche Schieber aus, so dass eine kostengünstige Fertigung ermöglicht wird.

Bevorzugt können auf dem Muskeltrainer durch Erhebungen oder Vertiefungen Beschriftungen aufgebracht werden.

Bevorzugt sind die beiden Federelemente aus einem thermoplastischen Kunststoff gefertigt. Der thermoplastische Kunststoff ist dabei bevorzugt ausgewählt aus Polyoxymethylen (POM), Polybutylenterephthalat (PBT), Polyamid (PA), Acrylnitril-Butadien-Styrol (ABS) und Polypropylen (PP).

Zum Erhalten von guten Gleiteigenschaften, bei denen nur eine geringe Reibung und keine Geräuschentwicklung bei einer Bewegung der Gelenkelemente relativ zueinander auftreten, sollten bekanntermaßen für die beiden Federelemente jeweils unterschiedliche Materialien verwendet werden. Beispielsweise wird eines der Federelemente aus Polyoxymethylen (POM) gefertigt und das andere Federelement wird aus einem davon verschiedenen thermoplastischen Kunststoff gefertigt. Nachteilig an dieser Vorgehensweise ist jedoch, dass die beiden Federelemente ggf. unterschiedliche Eigenschaften, insbesondere Schwindungen aufweisen.

Alternativ hierzu können beide Federelemente aus dem gleichen thermoplastischen Kunststoff gefertigt werden, wobei ein tribologisch modifizierter thermoplastischer Kunststoff eingesetzt wird. Hierfür ist insbesondere tribologisch modifiziertes Polyoxymethylen (POM) geeignet. Für eine Optimierung der tribologischen Eigenschaften des Materials wird hierfür dem POM üblicherweise ein Silikonöl als Additiv zugegeben. Ein geeignetes tribologisch modifiziertes POM ist unter der Bezeichnung Ultraform N 2320 003 TR erhältlich. In dieser Ausführungsvariante sind bevorzugt beide Federelemente aus dem tribologisch modifizierten POM gefertigt. Dies hat den Vorteil, dass ein Verzug oder eine Schwindung bei der Fertigung beide Federelemente gleichartig betreffen, so dass die Federelemente problemlos und passgenau zu dem Muskeltrainer zusammengesetzt werden können.

Der Kunststoff der Federelemente kann unverstärkt oder verstärkt sein, wobei bei einem faserverstärkten Kunststoff ein Faseranteil von bis zu 60 Gewichts-% möglich ist. Geeignete Fasern sind beispielsweise ausgewählt aus Glasfasern, Aramidfasern, Kohlenstofffasern. Die Fasern können als Kurzfasern, Langfasern oder "Endlos-Fasern" vorliegen. Durch den Faseranteil kann gezielt die Steifigkeit der Federelemente und damit die Steifigkeit des Muskeltrainers beeinflusst werden.

Des Weiteren kann der Kunststoff je nach Bedarf zusätzlich Additive enthalten.

Bevorzugt umfassen die Krafteinleitungsbereiche der Federelemente jeweils ein Krafteinleitungselement. Bevorzugt umschließt das Krafteinleitungselement den Krafteinleitungsbereich eines Federelements.

Das Krafteinleitungselement, welches bei der Anwendung als Handtrainer bevorzugt als ein Griff ausgestaltet ist, kann aus einem anderen Material als das Material der Federelemente gefertigt werden. Bevorzugt wird ein im Vergleich zum Material der Federelemente weiches Material verwendet, um eine für den Verwender angenehme Haptik zu erzielen. Beispielsweise wird das Krafteinleitungselement aus einem thermoplastischen Elastomer (TPE), beispielsweise einem thermoplastischen Polyurethan (TPU) gefertigt. Das Krafteinleitungselement kann dabei kompakt oder geschäumt ausgeführt sein. Bevorzugt wird für geschäumte Krafteinleitungselemente ein Polyurethanschaum eingesetzt.

Bevorzugt weist das Krafteinleitungselement auf der konkaven Seite des Federelements einen Abstandshalter auf, der die Durchbiegung des Muskeltrainers begrenzt.

Ein weiterer Aspekt der Erfindung ist es, ein Verfahren zur Herstellung eines der beschriebenen Muskeltrainer bereitzustellen. Hierzu wird ein Verfahren vorgeschlagen, umfassend die Schritte:
a) Herstellen des ersten Federelements und des zweiten Federelements mittels Spritzguss mit einer Spritzgussform,
b) Anordnen des ersten Federelements und des zweiten Federelements, so dass deren konkaven Seiten einander zugewandt sind und an den Enden der Federelemente jeweils ein erstes Gelenkelement an ein zweites Gelenkelement des jeweils anderen Federelements angrenzt,
c) Aufbiegen der Enden des ersten Federelements und des zweiten Federelements durch Krafteinwirkung auf die Federelemente,
d) Einschnappen jeweils eines zweiten Gelenkelements in jeweils ein erstes Gelenkelement, so dass die ersten Gelenkelemente jeweils ein zweites Gelenkelement des jeweils anderen Federelements zumindest teilweise umschließen, und
e) Beenden der Krafteinwirkung, wobei die Gelenkelemente der Federelemente Gelenke ausbilden.

Im Schritt a) des Verfahrens werden die beiden Federelemente mittels Spritzguss gefertigt. In besonders vorteilhaften Varianten des Verfahrens weisen die beiden Federelemente keine Hinterschneidungen auf, so dass die dabei verwendete mindestens eine Spritzgussform keine Schieber aufweist. Die Spritzgussform kann daher besonders einfach und kostengünstig gefertigt werden.

Des Weiteren sind beide Federelemente in ihrer Geometrie gleich, sodass sie in der gleichen Kavität des Werkzeuges bzw. in der gleichen Spritzgussform hergestellt werden können. Durch die Gleichheit der Geometrie der beiden Federelemente ist auch gewährleistet, dass sie nach dem Herstellungsprozess den gleichen Verzug aufweisen. Durch einen nach dem Spritzguss insbesondere bei der Abkühlung auftretenden Verzug weicht die tatsächliche Geometrie des gefertigten Federelements von der gewünschten Soll-Geometrie ab. Da das erste und das zweite Federelement eine identische Geometrie aufweisen, wirkt ein auftretender Verzug gleichermaßen auf beide Federelemente ein. Es ist daher problemlos möglich, die beiden Federelemente gemäß des Schritts b) des Verfahrens so anzuordnen, dass an beiden Enden der Federelemente jeweils ein erstes Gelenkelement und ein zweites Gelenkelement aneinander angrenzen. Federelemente, die sich in der Geometrie unterscheiden, könnten sich unterschiedlich stark verziehen, was die Ausbildung der Gelenke verhindern würde.

Nach der Herstellung der beiden Federelemente sind die Gelenke noch nicht zusammengesetzt. Zum Einfügen von jeweils einem zweiten Gelenkelement der Federelemente in das korrespondierende erste Gelenkelement des anderen Federelements werden im Schritt b) die beiden Federelemente entsprechend zueinander angeordnet. Dies kann beispielsweise erfolgen, indem eines der beiden Federelemente um die Querachse gedreht wird,

Im Schritt c) des Verfahrens werden Kräfte auf das erste Federelement und auf das zweite Federelement ausgeübt. Bevorzugt werden die Kräfte an den Krafteinleitungsbereichen der Federelemente ausgeübt, wobei beispielsweise eines der Federelemente auf einer Unterlage aufliegen kann und über einen Stempel Kraft auf den Krafteinleitungsbereich des anderen Federelements ausgeübt wird. Dabei werden die beiden Federelemente aufgebogen, wobei sich ihre Krümmung verringert, so dass das zweite Federelement in das erste Federelement gemäß Schritt d) eingesetzt werden kann. Anschließend wird die Krafteinwirkung auf das erste Federelement und auf das zweite Federelement beendet (Schritt e)). Das oder die Federelemente federn dabei zurück in ihre jeweilige Ausgangsposition, wobei jeweils ein Formschluss entsteht und die Gelenke gebildet werden. Der Muskeltrainer ist einsatzbereit.

Weisen die Krafteinleitungsbereiche der Federelemente Krafteinleitungselemente auf, beispielsweise Griffe, die aus einem anderen Material als das der Federelemente gefertigt sind, so werden im Schritt a) nach dem Herstellen der Federelemente diese in eine weitere Form zur Herstellung der Krafteinleitungselemente eingelegt oder durch Zurückziehen von Schiebern wird eine entsprechende Form zur Herstellung der Krafteinleitungselemente erzeugt. Anschließend können die Krafteinleitungselemente an die Federelemente angespritzt werden.

Alternativ können die Krafteinleitungselemente auch separat hergestellt werden und dann form-, kraft- und/oder stoffschlüssig mit den Federelementen verbunden werden.

Ein weiterer Aspekt der Erfindung betrifft die Verwendung eines der beschriebenen Muskeltrainer als Handtrainer, als Armtrainer oder als Beintrainer, wobei eine Verwendung als Handtrainer bevorzugt ist.

### Beispiele

Es wurden verschiedene als Handtrainer ausgestaltete Muskeltrainer hergestellt, die jeweils identische geometrische Abmessungen aufweisen. Der für die Federelemente verwendete thermoplastische Kunststoff wurde jeweils variiert, um Handtrainer mit unterschiedlichen Steifigkeiten bzw. Federkräften herzustellen. Als thermoplastischer Kunststoff wurde Polyoxymethylen (POM) verwendet, wobei das POM einmal unverstärkt und in fünf weiteren Beispielen mit unterschiedlichen Anteilen an Glasfasern verstärkt wurde.

Die hergestellten Federelemente weisen eine gekrümmte, längliche Form auf, wobei die Breite der Federelemente an den Enden 25 mm und in der Mitte der Federelemente 19 mm beträgt. Die Länge des Federelements ohne Krafteinwirkung, gemessen als direkte Verbindungslinie zwischen den beiden Enden, beträgt 204 mm. Die Wanddicke des Materials beträgt 2,5 mm an den Enden und 5 mm in der Mitte. Die Krümmung der Federelemente ist so eingestellt, dass im zusammengebauten Zustand die beiden Federelemente in der Mitte einen Abstand zueinander von 59 mm aufweisen.

Zur Berechnung der Gegenkraft der Federelemente bei Anwendung im Muskeltrainer war zunächst die Bestimmung des Elastizitätsmoduls der verschiedenen Kunststoffmaterialien notwendig. Zum Messen des Elastizitätsmoduls des Kunststoffmaterials wurden Probekörper hergestellt und im Zugversuch nach ISO 527-2:1993 mit definierter Prüfgeschwindigkeit die Kraft und die Längenänderung gemessen. Die Zugversuche wurden an Probekörpern aus Polyoxymethylen (POM) mit verschiedenen Glasfaseranteilen durchgeführt, wobei die ermittelten Elastizitätsmodule, die die Steifigkeit des Prüfkörpers beschreiben, in der Tabelle 1 angegeben sind. Diese wurden jeweils mit einer Prüfgeschwindigkeit von 1 mm/min ermittelt.

**(Tabelle 1)**

| Material | Elastizitätsmodul [MPa] bei 1 mm/min |
|---|---|
| POM unverstärkt | ∼2700 |
| POM mit 5 Gewichts-% Faseranteil | ∼3500 |
| POM mit 10 Gewichts-% Faseranteil | ∼4600 |
| POM mit 15 Gewichts-% Faseranteil | ∼5950 |
| POM mit 25 Gewichts-% Faseranteil | ∼8800 |

Die Zugversuche zeigen, dass durch Zugabe von 5 bis 25 Gewichts-% Glasfasern der Elastizitätsmodul des Materials von 2700 MPa für unverstärktes Material auf 8800 MPa für mit 25 Gewichts-% Glasfaseranteil verstärktem Material gesteigert werden kann.

Die Berechnung ergab, dass Federelemente mit 25 Gewichts-% Glasfaseranteil bereits für die Anwendung als Handtrainer zu steif waren. Deshalb wurden Federelemente für Handtrainer aus unverstärktem Material sowie aus fünf Materialien mit unterschiedlichem Glasfaseranteil hergestellt. Jeweils zwei identische Federelemente wurden zu einem Handtrainer zusammengesetzt und es wurde die Steifigkeit der hergestellten Handtrainer bestimmt. Hierzu wurde ein Handtrainer in eine Prüfapparatur eingesetzt, bei der über einen Stempel Kraft in vertikaler Richtung auf den Krafteinleitungsbereich eines der Federelemente ausgeübt wurde. Das andere Federelement lag auf einem Tisch auf, so dass der Handtrainer durch die Kraftausübung zunehmend zusammengedrückt wurde. Der Verformungsweg des Handtrainers und die ausgeübte Kraft wurden gemessen.

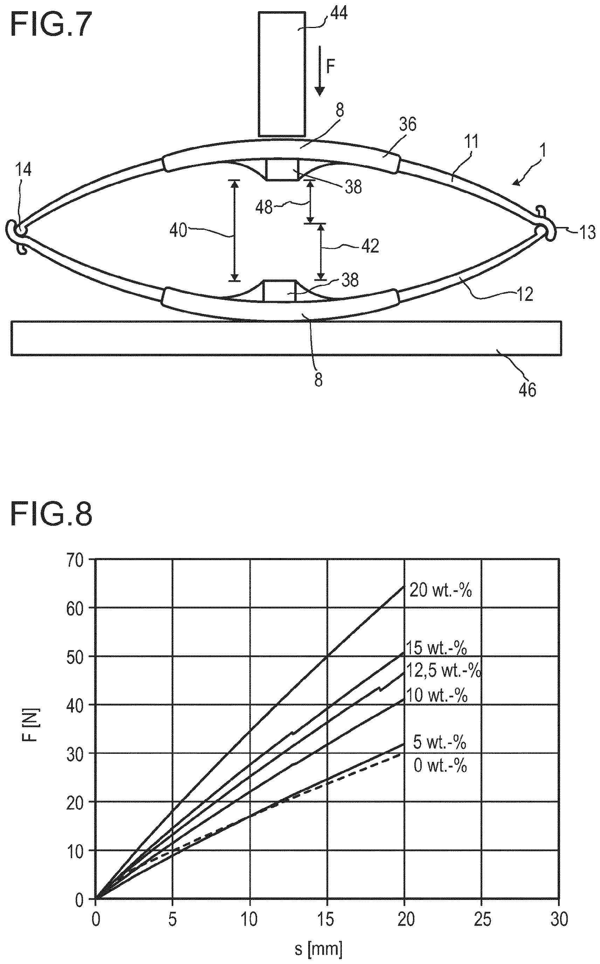

Die Messergebnisse für die fünf getesteten Handtrainer sind in Figur 8 dargestellt. In dem Diagramm der Figur 8 ist auf der X-Achse der Verformungsweg in mm und auf der Y-Achse die Kraft in N aufgetragen.

In den Kraft-Weg-Kurven der Figur 8 ist zu erkennen, dass die Handtrainer bei kleinem Verformungsweg ein leicht nicht-lineares Verhalten zeigen, wobei bei den Handtrainern mit Federelementen aus dem faserverstärkten Material die für eine bestimmte Verformung notwendige Kraft sich mit zunehmenden Fasergehalt vergrößert. Der Handtrainer aus dem unverstärkten Material weist ein stärkeres nicht-lineares Verhalten auf, so dass die für eine Verformung notwendige Kraft bis zu etwa 3 mm Verformung zunächst etwa genauso hoch ist, wie bei dem Handtrainer mit 10 Gewichts-% Faseranteil. Bei einem Verformungsweg von 10 mm entspricht die für die Verformung notwendige Kraft des Handtrainers aus unverstärktem Material der des Handtrainers mit 5 Gewichts-% Faseranteil. Oberhalb von 10 mm weisen alle Handtrainer aus mit Fasern verstärkten Materialien eine größere erforderliche Kraft auf als der Handtrainer aus dem unverstärkten Material.

Die Steifigkeit eines Handtrainers wird definiert als die Steigung der Kraft/Weg Kurve. Aufgrund der leichten Nichtlinearität nimmt die Steifigkeit mit zunehmendem Verformungsweg leicht ab.

In dem Bereich der maximalen gemessenen Verformung von 20 mm wurde die Steifigkeit für den Bereich von 15 mm bis 20 mm Verformungsweg ausgewertet. Die für die getesteten Handtrainer ermittelte Steifigkeit ist in der Tabelle 2 angegeben.

**(Tabelle 2)**

| Material | Steifigkeit [N/mm] |
|---|---|
| POM unverstärkt | 1,2 |
| POM mit 5 Gewichts-% Faseranteil | 1,5 |
| POM mit 10 Gewichts-% Faseranteil | 1,7 |
| POM mit 12,5 Gewichts-% Faseranteil | 2,1 |
| POM mit 15 Gewichts-% Faseranteil | 2,4 |
| POM mit 20 Gewichts-% Faseranteil | 2,9 |

Ausführungsbeispiele der Erfindung sind in den Figuren dargestellt und werden in der nachfolgenden Beschreibung näher erläutert.

Es zeigen:
Figur 1 eine erste Ausführungsform eines Muskeltrainers in einer Ansicht von vorne,
Figur 2 eine perspektivische Ansicht eines gefügten Gelenkes des Muskeltrainers,
Figur 3 den Muskeltrainer der ersten Ausführungsform in einer Ansicht von oben,
Figur 4A ein gefügtes Gelenk im unverformten Zustand des Muskeltrainers in einer Ansicht von vorn,
Figur 4B ein gefügtes Gelenk im verformten Zustand des Muskeltrainers in einer Ansicht von vorn,
Figur 5 ein Federelement einer Ausführungsform als Handtrainer mit Griffen in einer Ansicht von vorn,
Figur 6 der Handtrainer mit Griffen in einer Ansicht von unten,
Figur 7 eine Prüfanordnung zur Bestimmung der Steifigkeit des Muskeltrainers,
Figur 8 ein Kraft-Weg Diagramm für verschiedene Ausführungsbeispiele des Handtrainers.

In der nachfolgenden Beschreibung der Ausführungsbeispiele der Erfindung werden gleiche oder ähnliche Elemente mit gleichen Bezugszeichen bezeichnet, wobei auf eine wiederholte Beschreibung dieser Elemente in Einzelfällen verzichtet wird. Die Figuren stellen den Gegenstand der Erfindung nur schematisch dar.

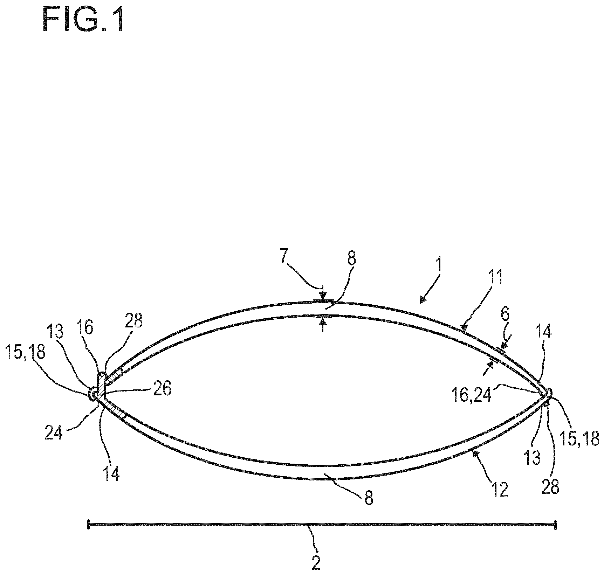

In Figur 1 ist eine erste Ausführungsform eines Muskeltrainers 1 in einer Ansicht von vorne dargestellt. Der Muskeltrainer 1 umfasst zwei längliche gekrümmte Federelemente 11,12 nämlich ein erstes Federelement 11 und ein zweites Federelement 12.

Die beiden Federelemente 11, 12 sind in der Ansicht von vorne sichelförmig ausgestaltet, wobei an einem ersten Endbereich 13 ein erstes Gelenkelement 15 und an einem zweiten Endbereich 14 ein zweites Gelenkelement 16 angeordnet ist. Die beiden Federelemente 11, 12 sind in dem Muskeltrainer 1 derart zueinander angeordnet, dass deren konkaven Seiten einander zugewandt sind.

Die Richtung parallel zu einer Verbindung der beiden Endbereiche 13, 14 der Sichelform wird als Längsrichtung bezeichnet. Die in der Figur 1 senkrecht zur Zeichenebene verlaufende Richtung wird als Querrichtung bezeichnet. Die Vertikalrichtung ist sowohl zur Längsrichtung als auch zur Querrichtung senkrecht.

Das erste Gelenkelement 15 der Federelemente 11, 12 ist in dem dargestellten Ausführungsbeispiel als umgebogene Lasche 18 ausgeführt, wobei der direkt an das Federelement 11, 12 angrenzende Bereich einer Lasche 18 in die gleiche Richtung wie das jeweilige Federelement 11,12 gekrümmt ist, jedoch einen wesentlich kleineren Biegeradius aufweist. In der in Figur 1 dargestellten Ausführungsform schließt sich die Lasche nicht tangential an die Form des Federelements 11, 12 an, sondern ist angewinkelt angeordnet.

Das zweite Gelenkelement 16 der Federelemente 11, 12 ist in dem dargestellten Ausführungsbeispiel als Walze 24 ausgeführt, wobei der Radius einer Walze 24 dem Biegeradius einer Lasche 18 im Wesentlichen entspricht. Die Walzen 24 sind mit ihren Achsen parallel zur Querrichtung ausgerichtet und grenzen jeweils an ein Ende der Federelemente 11, 12 an. Eine Lasche 18 bildet dabei ein Lager aus, in dem eine Walze 24 drehbar gelagert ist. In weiteren Ausführungsvarianten können beispielsweise anstelle von Walzen 24 als zweite Gelenkelemente 16 die zweiten Endbereiche 14 der Federelemente 11, 12 abgerundet werden, wobei der Radius der Abrundung bevorzugt dem Biegeradius der Lasche 18 entspricht.

In der Mitte weisen die Federelemente 11, 12 Krafteinleitungsbereiche 8 auf. Bei einer Betätigung des Muskeltrainers 1 wirken senkrecht zu den Federelementen 11, 12 Kräfte auf die Krafteinleitungsbereiche 8 ein. Hierdurch verbiegen sich die Federelemente 11, 12 elastisch. An den Endbereichen 13, 14 der Federelemente 11, 12 treten dabei keine oder nur sehr geringe Biegebeanspruchungen auf, da die Gelenkelemente 15, 16 eine Drehung erlauben. Die größte Biegebelastung tritt in der Mitte der Federelemente 11, 12 auf und nimmt in Richtung der Endreiche 13, 14 ab. Dementsprechend ist es bevorzugt die Wanddicke der Federelemente 11, 12 entsprechend der Biegebelastung zu variieren, wobei die Federelemente 11, 12 in der Mitte ihre größte Wanddicke 7 aufweisen und die Wanddicke zu den Endbereichen 13, 14 hin abnimmt, so dass die Federelemente 11, 12 an den Endbereichen 13, 14 ihre geringste Wanddicke 6 aufweisen. Die Längsausdehnung der Federelemente 11, 12 ist in der Figur 1 mit dem Bezugszeichen 2 angedeutet und auf den unbelasteten Zustand bezogen.

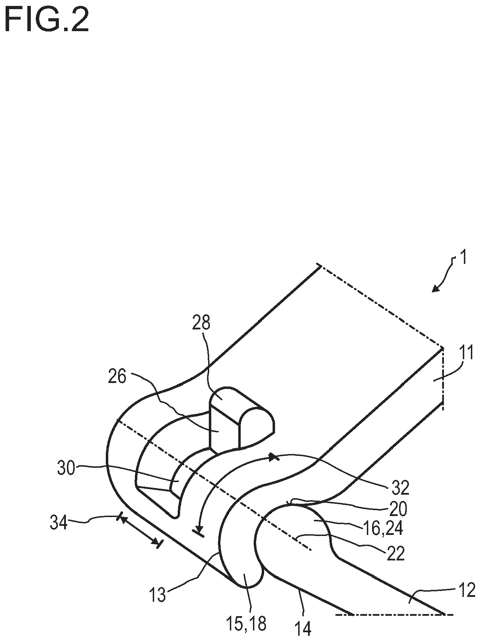

Figur 2 zeigt eine perspektivische Darstellung eines Gelenkes des Muskeltrainers 1.

Das in Figur 2 dargestellte Gelenk des Muskeltrainers 1 ist aus dem ersten Gelenkelement 15 des ersten Federelements 11 und dem zweiten Gelenkelement 16 des zweiten Federelements 12 gebildet.

Das erste Gelenkelement 15 des ersten Federelements 11 ist eine Lasche 18, die in die gleiche Richtung wie das erste Federelement 11 gekrümmt ist, jedoch einen wesentlich kleineren Biegeradius aufweist. Die Krümmung der Lasche 18 schließt sich nicht tangential an die Krümmung des ersten Federelements 11 an. Zwischen dem an das Federelement 11 angrenzenden Ansatz der Lasche 18 und der konvexen Seite des ersten Federelements 11 ist ein Winkel eingeschlossen, der kleiner als 180° ist.

Das zweite Gelenkelement 16 des zweiten Federelements 12 ist abgerundet und in dem dargestellten Ausführungsbeispiel als Walze 24 ausgeführt, wobei der Radius der Walze 24 dem Biegeradius einer Lasche 18 im Wesentlichen entspricht. Die Achse 22 der Walze 24 ist parallel zur Querrichtung ausgerichtet. Die Lasche 18 bildet ein Lager 20 aus, in dem eine Walze 24 drehbar gelagert ist.

Das zweite Gelenkelement 16 weist zusätzlich zu der Walze 24 einen Schnapphaken 26 mit einem am Ende des Schnapphakens 26 angeordneten Vorsprung 28 auf. Der Schnapphaken 26 mit dem Vorsprung 28 erstreckt sich durch eine Öffnung 30 in der Lasche 18 hindurch. Eine Breite 34 der Öffnung 30 ist dabei so gewählt, dass diese der Breite des Schnapphakens 26 entspricht, so dass ein Formschluss entsteht, der eine Bewegung zwischen den beiden Federelementen 11 und 12 in Querrichtung verhindert. Die Länge 32 der Öffnung 30 ist wesentlich größer als die entsprechende Abmessung des Schnapphakens 26 gewählt, so dass eine Rotationsbewegung des zweiten Gelenkelements 16 in dem ersten Gelenkelement 15 weiterhin möglich ist. Im unbelasteten Zustand liegt der Schnapphaken 26 mit dem Vorsprung 28 an dem der Mitte des ersten Federelements 11 zugewandten Rand der Öffnung 30 an, wobei der Schnapphaken 26 eine Relativbewegung der Federelemente 11 und 12 in Längsrichtung durch Formschluss verhindert. Zusätzlich zum Zusammenwirken von Lasche 18 und Walze 24 verhindert der Vorsprung 28 am Schnapphaken 26 eine Relativbewegung der beiden Federelemente 11, 12 in vertikaler Richtung. Bei einer Betätigung des Muskeltrainers 1 durch Aufbringen von Kräften auf die Krafteinleitungsbereiche 8 der Federelemente 11, 12 bewegt sich der Schnapphaken 26 mit dem Vorsprung 28 zur entgegengesetzten Seite der Öffnung 30, wobei eine die Gelenkelemente 15, 16 trennende Relativbewegung aufgrund der einwirkenden Kraft ausgeschlossen ist.

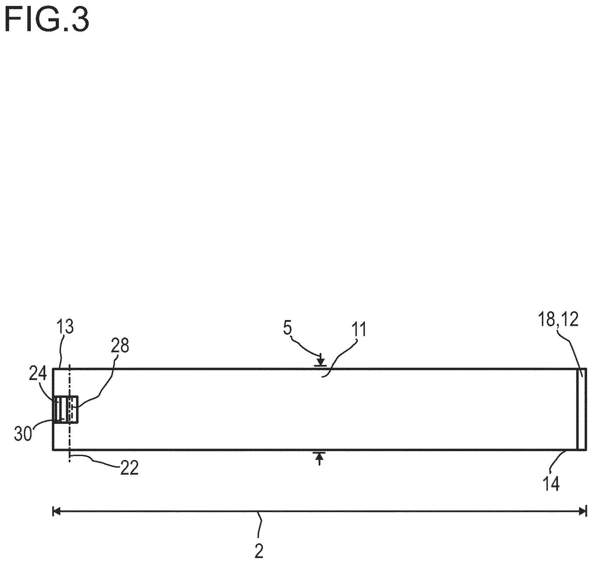

In Figur 3 ist der mit Bezug zu den Figuren 1 und 2 beschriebene Muskeltrainer 1 der ersten Ausführungsform in einer Ansicht von oben dargestellt.

In dieser Ansicht von oben ist in Verbindung mit der Ansicht von vorne der Figur 1 erkennbar, dass die Form der Federelemente 11, 12 als ein senkrechtes Zylindersegment beschrieben werden kann, das die in Figur 1 erkennbare sichelförmige Grundfläche aufweist. Ebenfalls in der Ansicht von oben ist ersichtlich, dass der Schnapphaken 26 mit seinem Vorsprung 28 des zweiten Gelenkelements 16 des zweiten Federelements 12 durch die Öffnung 30 in der Lasche 18 des ersten Federelements 11 gesteckt ist. Die Lasche 18 des zweiten Federelements 12 umschließt das zweite Gelenkelement 16 des ersten Federelements 11 (in der Figur 3 nicht sichtbar, vergleiche Figur 1) zumindest teilweise.

Die Breite 5 der Federelemente 11, 12 ist in dem in den Figuren 1 bis 3 dargestellten Ausführungsbeispiel über die gesamte Länge 2 der Federelemente 11, 12 konstant.

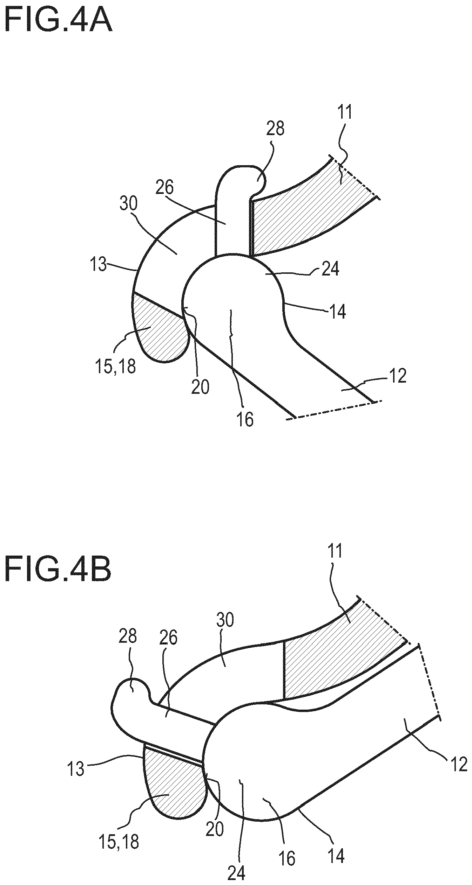

Die Figur 4A zeigt ein gefügtes Gelenk im unbelasteten bzw. unverformten Zustand des Muskeltrainers 1 in einer Ansicht von vorn. In der Figur 4B ist das gefügte Gelenk im belasteten, verformten Zustand des Muskeltrainers 1 in einer Ansicht von vorn dargestellt. Zur besseren Verdeutlichung der Funktion des gefügten Gelenks ist das erste Federelement 11 in den Figuren 4A und 4B teilweise im Schnitt dargestellt.

Das erste Gelenkelement 15 des ersten Federelements 11 ist, wie bereits mit Bezug zu den Figuren 1 und 2 beschrieben, als eine Lasche 18 ausgestaltet, die in die gleiche Richtung wie das erste Federelement 11 gekrümmt ist. Der Biegeradius der Lasche ist kleiner als der Biegeradius der Krümmung der Federelemente 11, 12 und entspricht dem Radius des als Walze 24 ausgestalteten zweiten Gelenkelements 16. Die Krümmung der Lasche 18 schließt sich nicht tangential an die Krümmung des ersten Federelements 11 an. Zwischen der konvexen Seite der Lasche 18 und der konvexen Seite des ersten Federelements 11 ist ein Winkel eingeschlossen, der kleiner als 180° ist.

Das zweite Gelenkelement 16 ist als Walze 24 ausgeführt und in dem durch die Lasche 18 gebildeten Lager 20 drehbar gelagert.

Das zweite Gelenkelement 16 weist zusätzlich zu der Walze 24 den Schnapphaken 26 mit dem am Ende des Schnapphakens 26 angeordneten Vorsprung 28 auf. Der Schnapphaken 26 mit dem Vorsprung 28 erstreckt sich durch eine Öffnung 30 in der Lasche 18 hindurch.

Im in der Figur 4A dargestellten unbelasteten Zustand liegt der Schnapphaken 26 mit dem Vorsprung 28 an dem der Mitte des ersten Federelements 11 zugewandten Rand der Öffnung 30 an, wobei der Schnapphaken 26 eine Relativbewegung der Federelemente 11 und 12 in Längsrichtung und der Vorsprung 28 eine Relativbewegung der Federelemente 11 und 12 in vertikaler Richtung durch Formschluss verhindert.

In der Figur 4B ist ein durch eine Betätigung des Muskeltrainers 1 erzeugter belasteter Zustand des Muskeltrainers 1 dargestellt. Durch das Aufbringen von Kräften auf die Krafteinleitungsbereiche 8 der Federelemente 11, 12 bewegt sich der Schnapphaken 26 mit dem Vorsprung 28 zur entgegengesetzten Seite der Öffnung 30. Bei maximaler Belastung, bei der die Krümmung der Federelemente 11, 12 aufgehoben ist, liegt der Schnapphaken 26 bevorzugt an dem nach außen weisenden Rand der Öffnung 30 an.

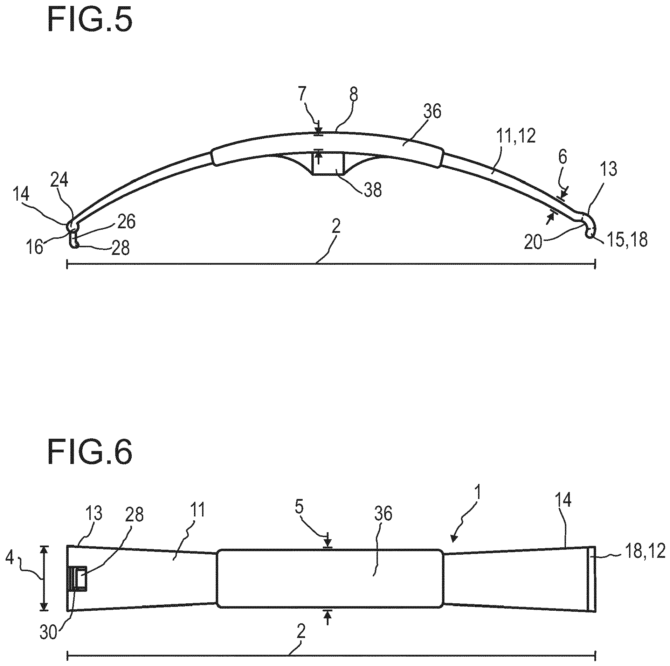

In Figur 5 ist eine Ausgestaltung der Federelemente 11, 12 für einen als Handtrainer ausgeführten Muskeltrainers 1 dargestellt. Da beide Federelemente 11, 12 identisch sind, ist für eine deutlichere Darstellung der Gelenkelemente nur eines der Federelemente 11, 12 dargestellt.

Wie bereits mit Bezug zu Figur 1 beschrieben weisen die Federelemente 11, 12 an ihrem ersten Endbereich 13 ein als Lasche 18 ausgeführtes erstes Gelenkelement 15 und an ihrem zweiten Endbereich ein als Walze 24 ausgeführtes zweites Gelenkelement 16 auf. An der Walze 24 ist zusätzlich ein Schnapphaken 26 mit einem Vorsprung 28 angeordnet.

Das in Figur 5 dargestellte Federelement 11, 12 des Handtrainers weist an dem Krafteinleitungsbereich 8 ein Krafteinleitungselement in Form eines Griffs 36 auf. Der Griff 36 umschließt das Federelement 11, 12 in dessen Krafteinleitungsbereich 8. Der Griff 36 ist bevorzugt aus einem anderen Material gefertigt als das der Federelemente 11, 12. Hierbei wird zur Verbesserung der Haptik bevorzugt ein Material ausgewählt, welches im Vergleich zu dem Material der Federelemente 11, 12 weich ist. Beispielsweise kann der Griff 36 aus einem ungeschäumten oder einem geschäumten Polyurethan gefertigt sein.

In der in Figur 5 dargestellten Ausführungsform ist der Griff 36 aus einem kompakten ungeschäumten thermoplastischen Polyurethan (TPU) gefertigt. Des Federelement 11, 12 weist zudem einen an der der konkaven Seite angeordneten Abstandshalter 38 auf, der in dieser Ausführungsform einstückig mit dem Griff 36 gefertigt ist. Durch den Abstandshalter 38 wird die maximal mögliche Durchbiegung eines aus zwei Federelementen 11, 12 gebildeten Handtrainers begrenzt.

Die Wanddicke des Federelements 11, 12 der Figur 5 variiert über die Länge des Federelements 11, 12 gesehen, wobei das Federelement 11, 12 in der Mitte seine größte Wanddicke 7 aufweist und die Wanddicke zu den Endbereichen 13, 14 hin abnimmt, so dass das Federelement 11, 12 an den Endbereichen 13, 14 seine geringste Wanddicke 6 aufweist. Die Längsausdehnung des Federelements 11, 12 ist in der Figur 5 mit dem Bezugszeichen 2 angedeutet und auf den unbelasteten Zustand bezogen.

In Figur 6 ist ein Muskeltrainer 1 dargestellt, der aus zweien der in Figur 5 dargestellten Federelemente 11, 12 zusammengesetzt ist und als Handtrainer ausgestaltet ist. Die Figur 6 zeigt den Handtrainer in einer Ansicht von unten.

Im Unterschied zu dem Muskeltrainer 1 der in den Figuren 1 und 3 dargestellten ersten Ausführungsform ist die Breite der Federelemente 11, 12 nicht konstant, sondern nimmt von der Mitte zu den Endbereichen 13, 14 zu. Die Federelemente 11, 12 weisen somit in der Mitte ihre geringste Breite 5 auf und weisen an ihren Endbereichen 13, 14 ihre größte Breite 30 auf. Im Zusammenspiel mit einer Variation der Wanddicke der Federelemente 11, 12, die wie in Figur 5 ersichtlich bevorzugt in der Mitte am größten ist, ist bei einer solchen Ausführung die Beanspruchung in den Federelementen 11, 12 über deren gesamte Länge 2 gleichmäßig.

In Figur 7 ist schematisch eine Prüfanordnung zur Bestimmung der Steifigkeit eines Muskeltrainers 1 dargestellt.

Zur Bestimmung der Steifigkeit wird eine Kraft-Weg-Messung durchgeführt, bei der ein Verformungsweg 48 bestimmt wird. Dazu wird der zu prüfende Muskeltrainer 1 auf einen Tisch 46 platziert, wobei eines der Federelemente 12 mit dessen Krafteinleitungsbereich 8 auf dem Tisch 46 aufliegt. Über einen Stempel 44 wird eine Kraft F auf den Krafteinleitungsbereich 8 des anderen Federelements 11 ausgeübt. Dabei verringert sich der Abstand zwischen den beiden Abstandshaltern 38 von einem ersten Abstand 40 zu einem zweiten Abstand 42. Die Differenz zwischen dem ersten Abstand 40 und dem zweiten Abstand 42 entspricht dem Verformungsweg 48.

Während der Messung werden der Verformungsweg 48 und die zugehörige Kraft F aufgezeichnet.

Figur 8 zeigt ein Kraft-Weg Diagramm für verschiedene Ausführungsbeispiele des Handtrainers.

In dem Diagramm der Figur 8 ist auf der X-Achse der Verformungsweg in mm und auf der Y-Achse die Kraft in N aufgetragen. Das Diagramm stellt Messungen für sechs verschiedene Beispiele eines Handtrainers dar, die jeweils identische Abmessungen aufweisen und sich nur im Fasergehalt des für die Federelemente verwendeten Kunststoffs unterscheiden. Die Federelemente wurden aus Polyoxymethylen (POM) mit Faseranteilen von 0 Gewichts-%, 5 Gewichts-%, 10 Gewichts-%, 12,5 Gewichts-%, 15 Gewichts-% und 20 Gewichts-% hergestellt.

In den Kraft-Weg-Kurven der Figur 8 ist zu erkennen, dass die Handtrainer bei kleinem Verformungsweg ein leicht nicht-lineares Verhalten zeigen, wobei bei den Handtrainern mit Federelementen aus dem faserverstärkten Material die für eine bestimmte Verformung notwendige Kraft sich mit zunehmenden Fasergehalt vergrößert. Der Handtrainer aus dem unverstärkten Material weist ein stärkeres nicht-lineares Verhalten auf, so dass die für eine Verformung notwendige Kraft bis zu etwa 3 mm Verformung zunächst etwa genauso hoch ist, wie bei dem Handtrainer mit 10 Gewichts-% Faseranteil. Bei einem Verformungsweg von 10 mm entspricht die für die Verformung notwendige Kraft des Handtrainers aus unverstärktem Material der des Handtrainers mit 5 Gewichts-% Faseranteil. Oberhalb von 10 mm weisen alle Handtrainer aus mit Fasern verstärkten Materialien eine größere erforderliche Kraft auf als der Handtrainer aus dem unverstärkten Material. Bei dem maximalen getesteten Verformungsweg von 20 mm weist der unverstärkte Kunststoff die geringste Kraft auf und die für eine Verformung von 20 mm notwendige Kraft steigt mit zunehmendem Fasergehalt im Kunststoff an.

### Bezugszeichenliste

- 1: Muskeltrainer
- 2: Länge
- 4: Breite
- 5: Breite in der Mitte
- 6: Wanddicke der Endbereiche
- 7: Wanddicke in der Mitte
- 8: Krafteinleitungsbereich
- 11: erstes Federelement
- 12: zweites Federelement
- 13: erster Endbereich
- 14: zweiter Endbereich
- 15: erstes Gelenkelement
- 16: zweites Gelenkelement
- 18: Lasche
- 20: Lager
- 22: Achse
- 24: Walze
- 26: Schnapphaken
- 28: Vorsprung
- 30: Öffnung
- 32: Länge Öffnung
- 34: Breite Öffnung
- 36: Griff
- 38: Abstandshalter
- 40: Abstand unbelastet
- 42: Abstand belastet
- 44: Stempel
- 46: Tisch
- 48: Verformungsweg
- F: Krafteinwirkung

## Patentansprüche

1. Muskeltrainer (1) mit einem ersten gekrümmten, länglichen Federelement (11) und einem zweiten gekrümmten, länglichen Federelement (12), wobei die beiden Federelemente (11, 12) mit ihren konkaven Seiten einander zugewandt angeordnet sind, an den Enden der beiden Federelemente (11, 12) jeweils Endbereiche (13, 14) ausgebildet sind, wobei an einem ersten Endbereich (13) jedes Federelements (11, 12) ein erstes Gelenkelement (15) ausgebildet ist und an einem zweiten Endbereich (14) jedes Federelements (11, 12) ein zweites Gelenkelement (16) ausgebildet ist, und die Federelemente (11, 12) über aus den Gelenkelementen (15, 16) gebildete Gelenke an ihren beiden Endbereichen (13, 14) miteinander verbunden sind, **dadurch gekennzeichnet, dass** der Muskeltrainer (1) aus dem erstem Federelement (11) und dem zweiten Federelement (12) besteht und dass die ersten Gelenkelemente (15) als Laschen (18) ausgebildet sind, wobei die Laschen (18) eine Biegung in Richtung der konkaven Seite des jeweiligen Federelements (11, 12) aufweisen und jeweils das zweite Gelenkelement (16) des jeweils anderen Federelements (11, 12) teilweise umschließen, wobei die zweiten Gelenkelemente (16) als Walze ausgeführt oder abgerundet ausgestaltet sind und die Laschen (18) jeweils ein Lager (20) ausbilden, in dem das jeweils umschlossene zweite Gelenkelement (16) drehbar gelagert ist.

2. Muskeltrainer (1) nach Anspruch 1, **dadurch gekennzeichnet, dass** das erste Federelement (11) und das zweite Federelement (12) eine identische Geometrie aufweisen.

3. Muskeltrainer (1) nach Anspruch1 oder 2, **dadurch gekennzeichnet, dass** jeweils ein Gelenkelement (15, 16) des ersten Federelements (11) mit einem Gelenkelement (15, 16) des zweiten Federelements (12) einen Formschluss ausbildet, der eine seitliche Bewegung des ersten Federelements (11) relativ zum zweiten Federelement (12) verhindert.

4. Muskeltrainer (1) nach Anspruch 3, **dadurch gekennzeichnet, dass** der Formschluss durch jeweils einen Schnapphaken (26) an dem zweiten Gelenkelement (16) gebildet ist, der jeweils in eine korrespondierende Öffnung (30) im ersten Endbereich (13) des jeweils anderen Federelements (11, 12) eingreift, wobei der Schnapphaken (26) im Zusammenwirken mit der Öffnung (30) einen weiteren Formschluss bildet, der eine Bewegung in Längsrichtung des ersten Federelements (11) relativ zum zweiten Federelement (12) verhindert.

5. Muskeltrainer (1) nach Anspruch 4, **dadurch gekennzeichnet, dass** der Schnapphaken (26) einen Vorsprung (28) aufweist, der im Zusammenwirken mit der Öffnung (30) im ersten Endbereich (13) einen Formschluss bildet, der eine vertikale Bewegung des ersten Federelements (11) relativ zum zweiten Federelement (12) verhindert.

6. Muskeltrainer (1) nach einem der Ansprüche 1 bis 5, **dadurch gekennzeichnet, dass** sowohl das erste Federelement (11) als auch das zweite Federelement (12) jeweils frei von Hinterschnitten ausgeführt sind.

7. Muskeltrainer (1) gemäß einem der Ansprüche 1 bis 6, **dadurch gekennzeichnet, dass** die beiden Federelemente (11, 12) aus einem thermoplastischen Kunststoff gefertigt sind, wobei der thermoplastische Kunststoff insbesondere ausgewählt ist aus Polyoxymethylen (POM), Polybutylenterephthalat (PBT), Polyamid (PA), Acrylnitril-Butadien-Styrol (ABS) und Polypropylen (PP).

8. Muskeltrainer (1) gemäß Anspruch 7, **dadurch gekennzeichnet, dass** der thermoplastische Kunststoff faserverstärkt ist.

9. Muskeltrainer (1) gemäß Anspruch 8, **dadurch gekennzeichnet, dass** eine Gegenkraft der Federelemente (11, 12) durch die Wahl des Fasergehalts im thermoplastischen Kunststoff einstellbar ist, wobei der Fasergehalt im Bereich von 1 Gew.-% bis 50 Gew.-% gewählt ist.

10. Muskeltrainer (1) gemäß einem der Ansprüche 1 bis 9, **dadurch gekennzeichnet, dass** die Federelemente (11, 12) jeweils an einem Krafteinleitungsbereich (8) einen Griff (36) umfassen.

11. Muskeltrainer (1) gemäß Anspruch 10, **dadurch gekennzeichnet, dass** der Griff (36) aus einem thermoplastischen Polyurethan (TPU) gefertigt ist.

12. Muskeltrainer (1) gemäß einem der Ansprüche 10 oder 11, **dadurch gekennzeichnet, dass** der Griff (36) auf der konkaven Seite des Federelements (11, 12) einen Abstandshalter (38) zur Begrenzung der Durchbiegung aufweist.

13. Verfahren zur Herstellung eines Muskeltrainers (1) gemäß einem der Ansprüche 1 bis 12, umfassend die Schritte:
a) Herstellen des ersten Federelements (11) und des zweiten Federelements (12) mittels Spritzguss mit einer Spritzgussform,
b) Anordnen des ersten Federelements (11) und des zweiten Federelements (12), so dass deren konkaven Seiten einander zugewandt sind und an den Enden der Federelemente (11, 12) jeweils ein erstes Gelenkelement (15) an ein zweites Gelenkelement (16) des jeweils anderen Federelements (11, 12) angrenzt,
c) Aufbiegen der Enden des ersten Federelements (11) und des zweiten Federelements (12) durch Krafteinwirkung auf die Federelemente (11, 12),
d) Einschnappen jeweils eines zweiten Gelenkelements (16) in jeweils ein erstes Gelenkelement (15), so dass die ersten Gelenkelemente (15) jeweils ein zweites Gelenkelement (16) des jeweils anderen Federelements (11, 12) zumindest teilweise umschließen, und
e) Beenden der Krafteinwirkung, wobei die Gelenkelemente (15, 16) der Federelemente (11, 12) Gelenke ausbilden.

14. Verwendung des Muskeltrainers (1) gemäß einem der Ansprüche 1 bis 12 als Handtrainer.

## Claims

1. A muscle trainer (1) having a first curved, elongate spring element (11) and a second curved, elongate spring element (12), the two spring elements (11, 12) being arranged with their concave sides facing each other, end areas (13, 14) being formed at each of the ends of the two spring elements (11, 12), a first joint element (15) being formed at a first end area (13) of each spring element (11, 12) and a second joint element (16) being formed at a second end area (14) of each spring element (11, 12), and the spring elements (11, 12) being connected to each other at their two end areas (13, 14) via joints formed from the joint elements (15, 16), wherein the muscle trainer (1) consists of the first spring element (11) and the second spring element (12) and wherein the first joint elements (15) are designed as brackets (18), the brackets (18) having a bend in the direction of the concave side of the respective spring element (11, 12) and in each case partially enclosing the second joint element (16) of the respective other spring element (11, 12), second joint elements (16) being configured as a roller or being rounded, and the brackets (18) each forming a bearing (20) in which the respective enclosed second joint element (16) is mounted rotatably.

2. The muscle trainer (1) according to Claim 1, wherein the first spring element (11) and the second spring element (12) have an identical geometry.

3. The muscle trainer (1) according to Claim 1 or 2, wherein a respective joint element (15, 16) of the first spring element (11) establishes a form-fit connection with a joint element (15, 16) of the second spring element (12), which form-fit connection prevents a lateral movement of the first spring element (11) relative to the second spring element (12).

4. The muscle trainer (1) according to Claim 3, wherein the form-fit connection is formed by in each case a snap-in hook (26) on the second joint element (16), which snap-in hook (26) in each case engages in a corresponding opening (30) in the first end area (13) of the respective other spring element (11, 12), the snap-in hook (26) interacting with the opening (30) to establish a further form-fit connection which prevents a movement, in the longitudinal direction, of the first spring element (11) relative to the second spring element (12).

5. The muscle trainer (1) according to Claim 4, wherein the snap-in hook (26) has a projection (28) which, by interaction with the opening (30) in the first end area (13), establishes a form-fit connection which prevents a vertical movement of the first spring element (11) relative to the second spring element (12).

6. The muscle trainer (1) according to one of Claims 1 to 5, wherein the first spring element (11) and the second spring element (12) are both free of undercuts.

7. The muscle trainer (1) according to one of Claims 1 to 6, wherein the two spring elements (11, 12) are produced from a thermoplastic, said thermoplastic being chosen in particular from polyoxymethylene (POM), polybutylene terephthalate (PBT), polyamide (PA), acrylonitrile-butadienestyrene (ABS) and polypropylene (PP).

8. The muscle trainer (1) according to Claim 7, wherein the thermoplastic is fiber-reinforced.

9. The muscle trainer (1) according to Claim 8, wherein an opposing force of the spring elements (11, 12) is adjustable through the choice of the fiber content in the thermoplastic, the fiber content being chosen in the range from 1% by weight to 50% by weight.

10. The muscle trainer (1) according to one of Claims 1 to 9, wherein the spring elements (11, 12) each comprise a grip (36) on a force introduction area (8).

11. The muscle trainer (1) according to Claim 10, wherein the grip (36) is produced from a thermoplastic polyurethane (TPU).

12. The muscle trainer (1) according to either of Claims 10 and 11, wherein the grip (36) has, on the concave side of the spring element (11, 12), a spacer (38) for limiting the bending.

13. A method for producing a muscle trainer (1) according to one of Claims 1 to 12, comprising the steps of:
a) producing the first spring element (11) and the second spring element (12) by injection molding using an injection mold,
b) arranging the first spring element (11) and the second spring element (12) such that their concave sides face each other and such that, at the ends of the spring elements (11, 12), a respective first joint element (15) adjoins a second joint element (16) of the respective other spring element (11, 12),
c) bending the ends of the first spring element (11) and of the second spring element (12) by applying force to the spring elements (11, 12),
d) snapping a respective second joint element (16) into a respective first joint element (15), such that the first joint elements (15) each at least partially enclose a second joint element (16) of the respective other spring element (11, 12), and
e) terminating the force application, wherein the joint elements (15, 16) of the spring elements (11, 12) form joints.

14. The use of the muscle trainer (1) according to one of Claims 1 to 12 as a hand trainer.

## Revendications

1. Appareil d'entraînement musculaire (1) comprenant un premier élément à ressort incurvé allongé (11) et un deuxième élément à ressort incurvé allongé (12), les deux éléments à ressort (11, 12) étant disposés avec leurs côtés concaves dirigés l'un vers l'autre, des régions d'extrémité (13, 14) étant formées aux extrémités des deux éléments à ressort (11, 12), un premier élément d'articulation (15) étant formé au niveau d'une première région d'extrémité (13) de chaque élément à ressort (11, 12) et un deuxième élément d'articulation (16) étant formé au niveau d'une deuxième région d'extrémité (14) de chaque élément à ressort (11, 12), et les éléments à ressort (11, 12) étant reliés l'un à l'autre au niveau de leurs deux régions d'extrémité (13, 14) par des articulations formées à partir des éléments d'articulation (15, 16), **caractérisé en ce que** l'appareil d'entraînement musculaire (1) comprend le premier élément à ressort (11) et le deuxième élément à ressort (12) et **en ce que** les premiers éléments d'articulation (15) sont réalisés sous forme de languettes (18), les languettes (18) comportant une courbure en direction du côté concave de l'élément à ressort respectif (11, 12) et renfermant chacune partiellement le deuxième élément d'articulation (16) de l'autre élément à ressort respectif (11, 12), les deuxièmes éléments d'articulation (16) étant conçus comme un rouleau ou étant arrondis et les languettes (18) formant chacune un palier (20) dans lequel le deuxième élément d'articulation (16) respectivement enfermé est monté à rotation.

2. Appareil d'entraînement musculaire (1) selon la revendication 1, **caractérisé en ce que** le premier élément à ressort (11) et le deuxième élément à ressort (12) ont une géométrie identique.

3. Appareil d'entraînement musculaire (1) selon la revendication 1 ou 2, **caractérisé en ce que** chaque élément d'articulation (15, 16) du premier élément à ressort (11) forme avec un élément d'articulation (15, 16) du deuxième élément à ressort (12) une liaison par complémentarité de formes qui empêche un mouvement latéral du premier élément à ressort (11) par rapport au deuxième élément à ressort (12).

4. Appareil d'entraînement musculaire (1) selon la revendication 3, **caractérisé en ce que** la liaison par complémentarité de formes est formée au niveau du deuxième élément d'articulation (16) par un crochet à enclenchement (26) qui s'engage dans une ouverture correspondante (30) ménagée dans la première région d'extrémité (13) de l'autre élément à ressort (11, 12), le crochet à enclenchement (26) formant en coopération avec l'ouverture (30) une autre liaison par complémentarité de formes qui empêche un mouvement dans la direction longitudinale du premier élément à ressort (11) par rapport au deuxième élément à ressort (12).

5. Appareil d'entraînement musculaire (1) selon la revendication 4, **caractérisé en ce que** le crochet à enclenchement (26) comporte une saillie (28) qui forme en coopération avec l'ouverture (30) ménagée dans la première région d'extrémité (13) une liaison par complémentarité de formes qui empêche un mouvement vertical du premier élément à ressort (11) par rapport au deuxième élément à ressort (12).

6. Appareil d'entraînement musculaire (1) selon l'une des revendications 1 à 5, **caractérisé en ce que** le premier élément à ressort (11) et le deuxième élément à ressort (12) sont chacun conçus sans contre-dépouilles.

7. Appareil d'entraînement musculaire (1) selon l'une des revendications 1 à 6, **caractérisé en ce que** les deux éléments à ressort (11, 12) sont fabriqués à partir d'une matière thermoplastique, la matière thermoplastique étant choisie notamment parmi le polyoxyméthylène (POM), le téréphtalate de polybutylène (PBT), le polyamide (PA), l'acrylonitrile-butadiène-styrène (ABS) et le polypropylène (PP).

8. Appareil d'entraînement musculaire (1) selon la revendication 7, **caractérisé en ce que** la matière thermoplastique est renforcée par des fibres.

9. Appareil d'entraînement musculaire (1) selon la revendication 8, **caractérisé en ce qu'**une force antagoniste des éléments à ressort (11, 12) est réglable par le choix de la teneur en fibres dans la matière thermoplastique, la teneur en fibres étant choisie dans la gamme allant de 1 % en poids à 50 % en poids.

10. Appareil d'entraînement musculaire (1) selon l'une des revendications 1 à 9, **caractérisé en ce que** les éléments à ressort (11, 12) comportent chacun une poignée (36) au niveau d'une région d'application de force (8).

11. Appareil d'entraînement musculaire (1) selon la revendication 10, **caractérisé en ce que** la poignée (36) est en polyuréthane thermoplastique (TPU).

12. Appareil d'entraînement musculaire (1) selon l'une des revendications 10 ou 11, **caractérisé en ce que** la poignée (36) comporte du côté concave de l'élément à ressort (11, 12) un élément d'espacement (38) destiné à limiter la déflexion.

13. Procédé de fabrication d'un appareil d'entraînement musculaire (1) selon l'une des revendications 1 à 12, ledit procédé comprenant les étapes suivantes :
a) réaliser le premier élément à ressort (11) et le deuxième élément à ressort (12) par moulage par injection avec un moule de moulage par injection,
b) disposer le premier élément à ressort (11) et le deuxième élément à ressort (12) de telle sorte que leurs côtés concaves soient dirigés l'un vers l'autre et, aux extrémités des éléments à ressort (11, 12), un premier élément d'articulation respectif (15) soit adjacent à un deuxième élément d'articulation (16) de l'autre élément à ressort respectif (11, 12),
c) plier les extrémités du premier élément à ressort (11) et du deuxième élément à ressort (12) par l'action d'une force sur les éléments à ressort (11, 12),
d) encliqueter un deuxième élément d'articulation (16) dans un premier élément d'articulation (15) de sorte que les premiers éléments d'articulation (15) enferment chacun au moins partiellement un deuxième élément d'articulation (16) de l'autre élément à ressort respectif (11, 12), et
e) mettre fin à l'action de la force, les éléments d'articulation (15, 16) des éléments à ressort (11, 12) formant des articulations.

14. Utilisation de l'appareil d'entraînement musculaire (1) selon l'une des revendications 1 à 12 comme appareil d'entraînement de la main.
